# EUROPÄISCHE PATENTSCHRIFT

(11) **EP 3 744 968 B1**
(45) Veröffentlichungstag und Bekanntmachung des Hinweises auf die Patenterteilung: **02.07.2025**
(21) Anmeldenummer: 19176934.8
(22) Anmeldetag: 28.05.2019
(51) Int. Cl.: F02N 3/02, F02N 15/00, F16F 1/10, B65H 75/44, B65H 75/42, F16F 1/12

(54) **FEDERGEHÄUSE UND ANWERFVORRICHTUNG MIT EINEM SOLCHEN FEDERGEHÄUSE**
SPRING BOX AND MANUALLY-OPERATED TURNING GEAR COMPRISING SUCH A SPRING BOX
BOÎTIER DE RESSORT ET DISPOSITIF DE LANCEMENT DOTÉ D'UN TEL BOÎTIER DE RESSORT

(43) Veröffentlichungstag der Anmeldung: 02.12.2020
(73) Patentinhaber: Andreas Stihl AG & Co. KG, 71336 Waiblingen (DE)
(72) Erfinder: FRANKENBERG, Christoph, 71364 Winnenden (DE); BERGER, Jens, 79291 Merdingen (DE)
(74) Vertreter: Reinhardt, Annette

(56) Entgegenhaltungen:
- EP-A1- 1 365 143
- EP-A1- 1 558 845
- EP-A1- 1 865 196
- EP-B1- 1 558 845
- WO-A1-2014/137261
- WO-A1-2015/199658
- DE-U1- 202012 100 536
- US-A- 3 375 814
- US-A1- 2005 051 127

## Beschreibung

Die Erfindung betrifft ein Federgehäuse nach dem Oberbegriff des Anspruchs 1 und eine Anwerfvorrichtung mit einem solchen Federgehäuse.

Aus der WO 2015/072900 A1 ist eine Anwerfvorrichtung zum Starten eines Verbrennungsmotors mit einem um eine Drehachse drehbar gelagerten Federgehäuse bekannt, bei dem ein Federaufnahmeraum des Federgehäuses mit einer Abdeckplatte abgedeckt ist. Der Grundkörper des Federgehäuses weist am Umfangsrand des Federaufnahmeraums sich in Richtung der Drehachse erstreckende Schraubdome auf. Korrespondierend hierzu sind in der Abdeckplatte Löcher angeordnet, die die Abdeckplatte in Richtung der Drehachse vollständig durchdringen. Zur Befestigung der Abdeckplatte werden Schrauben durch die Löcher der Abdeckplatte in die Schraubdome geschraubt. Die Schraubdome sind radial außerhalb des Federaufnahmeraums angeordnet. Das Federgehäuse beansprucht in Radialrichtung einen großen Bauraum.

Aus der WO 2015/199658 A1 ist ein Federgehäuse mit einer in eine Federaufnahme aufgenommenen Feder bekannt, die mit einem Mitnehmer verbunden ist, der die Federaufnahme abdeckt.

Aus der EP 1 365 143 A1 ist eine Seilrolle mit einer Federaufnahmekammer bekannt, in die eine Feder aufgenommen ist. Ein Mitnehmer weist ebenfalls eine Federaufnahmekammer aufweist und ist mit einer Schraube und einer Unterlegscheibe an der Seilrolle befestigt.

Aus der US 2005/0051127 A1 ist ein Federgehäuse bekannt, das mit einer Abdeckplatte abgedeckt ist, die mittels Schrauben in den im Federgehäuse vorgesehenen Bohrungen befestigt ist und die Verbindungsfeder abdeckt.

Aus der US 3,375,814 A ist ein Federaufnahmeraum mit einem topfförmigen Deckel bekannt. An dem Deckel sind Fortsätze ausgebildet, die durch eine Drehbewegung entsprechenden Konturen des Federaufnahmeraums hintergreifen, wodurch der Deckel am Federaufnahmeraum befestigt werden kann.

Der Erfindung liegt die Aufgabe zugrunde, ein gattungsgemäßes Federgehäuse derart weiterzubilden, dass es auf einfache Weise platzsparend gestaltet sein kann.

Diese Aufgabe wird durch ein Federgehäuse mit den Merkmalen des Anspruchs 1 gelöst.

Eine weitere Aufgabe der Erfindung liegt darin, eine Anwerfvorrichtung mit einem Federgehäuse anzugeben, die platzsparend gestaltet sein kann.

Diese Aufgabe wird durch eine Anwerfvorrichtung mit den Merkmalen des Anspruchs 16 gelöst.

Beim erfindungsgemäßen Federgehäuse besteht das mindestens eine erste Verbindungsmittel zur Sicherung der Abdeckplatte gegen eine Bewegung relativ zum Grundkörper in Richtung der Mittelachse aus einer Öffnung im Grundkörper und einem mit der Öffnung korrespondierenden Fortsatz der Abdeckplatte. Gegen eine Bewegung der Abdeckplatte relativ zum Grundkörper in Richtung der Mittelachse des Federgehäuses ist die Abdeckplatte erfindungsgemäß durch ein erstes Verbindungsmittel gesichert, das ausschließlich durch den Grundkörper und die Abdeckplatte gebildet ist. Zur Sicherung gegen eine Bewegung in Richtung der Mittelachse sind keine weiteren Bauteile des ersten Verbindungsmittels erforderlich. Folglich ist zur Sicherung der Abdeckplatte gegen eine Bewegung in Richtung der Mittelachse auch keine Schraube und damit auch kein Schraubdom im Grundkörper des Federgehäuses erforderlich. Dadurch kann Bauraum, insbesondere in Richtung radial zur Mittelachse eingespart werden. Insbesondere kann im Bereich des mindestens einen erstenVerbindungsmittels auf die Anordnung eines Schraubdoms im Grundkörper des Federgehäuses verzichtet werden. Weitere erste Verbindungsmittel von Abdeckplatte und Grundkörper können ebenfalls ausschließlich durch den Grundkörper und die Abdeckplatte gebildet sein oder alternativ weitere, separat von Grundkörper und Abdeckplatte ausgebildete Elemente umfassen.

Die Mittelachse ist vorteilhaft die Drehachse, um die sich das Federgehäuse im Betrieb der Anwerfvorrichtung dreht. Die Mittelachse durchragt vorteilhaft eine Zugangsöffnung des Federaufnahmeraums. Die Mittelachse verläuft insbesondere senkrecht zu einem Boden des Federaufnahmeraums.

Erfindungsgemäß ist der Grundkörper mit der Abdeckplatte durch eine Relativbewegung des Fortsatzes des ersten Verbindungsmittels gegenüber der Öffnung des ersten Verbindungsmittels in einer Querrichtung quer zur Mittelachse derart verbindbar, dass die Abdeckplatte gegen eine Bewegung relativ zum Grundkörper in Richtung der Mittelachse gesichert ist. Die Querrichtung verläuft insbesondere senkrecht zur Mittelachse.

Insbesondere ist das erste Verbindungsmittel werkzeuglos montierbar. Dadurch wird die Montage und Demontage der Abdeckplatte vereinfacht und der Zeitbedarf für Montage und Demontage deutlich verringert.

Erfindungsgemäß ist der erste Teil des mindestens einen ersten Verbindungsmittels eine Öffnung im Grundkörper und der zweite Teil des ersten Verbindungsmittels ist ein Fortsatz der Abdeckplatte, der mit der Öffnung im Grundkörper korrespondiert. Es ist vorgesehen, dass die Abdeckplatte mit dem Fortsatz in die Öffnung des Grundkörpers gesteckt und so gegen eine Bewegung in Richtung der Mittelachse gesichert wird. Zweckmäßig durchdringt die Öffnung den Grundkörper in Querrichtung quer, insbesondere senkrecht zur Mittelachse vollständig. Es kann aber auch vorgesehen sein, dass die Öffnung lediglich als eine Vertiefung im Grundkörper ausgebildet ist. Zweckmäßig durchdringt die Öffnung den Grundkörper in Querrichtung dann lediglich teilweise. Insbesondere steht der Fortsatz im verbundenen Zustand von Abdeckplatte und Grundkörper in Querrichtung quer zur Mittelachse, insbesondere in Richtung senkrecht zur Mittelachse über den Federaufnahmeraum hervor. Dadurch kann das Federgehäuse so gestaltet sein, dass die Abdeckplatte den Federaufnahmeraum bis zu seinem Rand abdeckt und gleichzeitig mit ihrem Fortsatz in der Öffnung des Grundkörpers gegen eine Bewegung in Richtung der Mittelachse gesichert ist. Zweckmäßig steht der Fortsatz in Querrichtung über den Federaufnahmeraum hervor, vorteilhaft jedoch nicht über einen Außenumfang des Grundkörpers des Federgehäuses. Besonders vorteilhaft liegt ein Außenumfang einer Außenwand des Federaufnahmeraums radial außerhalb des Fortsatzes.

In vorteilhafter Weiterbildung der Erfindung sind mindestens zwei lediglich aus einer Öffnung im Grundkörper und einem Fortsatz an der Abdeckplatte bestehende erste Verbindungsmittel zur Sicherung gegen eine Bewegung der Abdeckplatte relativ zum Grundkörper in Richtung der Mittelachse vorgesehen, die in einem im verbundenen Zustand von Abdeckplatte und Grundkörper bezüglich der Mittelachse gemessenen Umfangswinkelbereich von kleiner als 180°, insbesondere von kleiner als 135°, bevorzugt von kleiner als 110° angeordnet sind. Insbesondere sind mehrere Fortsätze vorgesehen. Vorteilhaft sind alle Fortsätze in dem im verbundenen Zustand von Abdeckplatte und Grundkörper bezüglich der Mittelachse gemessenen Umfangswinkelbereich von kleiner als 180°, insbesondere von kleiner als 135°, bevorzugt von kleiner als 110° auf der Abdeckplatte angeordnet. Alle Fortsätze der Abdeckplatte erstrecken sich vorteilhaft vollständig in einer Hälfte der Abdeckplatte. Der Begriff "Fortsatz" bezieht sich ausschließlich auf einen Fortsatz, der den ersten Teil des aus einem ersten Teil am Grundkörper und einem zweiten Teil an der Abdeckplatte bestehenden ersten Verbindungsmittels bildet.

Zweckmäßig besitzt die Öffnung einen geschlossen umlaufenden Rand. Vorteilhaft ist der in die Öffnung eingesteckte Fortsatz gegen den Rand der Öffnung vorgespannt. Der in die Öffnung eingesteckte Fortsatz ist dabei insbesondere in Richtung der Mittelachse gegen den Rand der Öffnung vorgespannt.

In vorteilhafter Weiterbildung der Erfindung ist vorgesehen, dass der Fortsatz der Abdeckplatte in der Öffnung mit einer Oberseite der Abdeckplatte an einer Fortsatzanlagefläche des Grundkörpers anliegt, und dass die Abdeckplatte außerhalb der Öffnung mit einer Unterseite der Abdeckplatte auf einer Auflagefläche des Grundkörpers aufliegt. Dadurch kann das Federgehäuse auf einfache Weise so gestaltet sein, dass die Abdeckplatte in Richtung der Mittelachse spielfrei im Grundkörper gehalten ist. Zweckmäßig verläuft die Auflagefläche geneigt zu einer gedachten Ebene senkrecht zur Mittelachse. Dadurch kann die Auflagefläche derart gestaltet sein, dass sich die Abdeckplatte auf einfache Weise in die Öffnung des Grundkörpers einstecken lässt und gleichzeitig sichergestellt wird, dass die Abdeckplatte mit ihrer Unterseite auf der Auflagefläche zum Aufliegen kommt. Die Auflagefläche bildet vorteilhaft eine Rampe, auf der die Abdeckplatte beim Einstecken des Fortsatzes in die Öffnung geführt ist. Zweckmäßig ist die Unterseite der Abdeckplatte dem Federaufnahmeraum zugewandt und die Oberseite der Abdeckplatte dem Federaufnahmeraum abgewandt.

In vorteilhafter Weiterbildung der Erfindung umfasst das Federgehäuse außer dem mindestens einen ersten Verbindungsmittel ein getrennt vom mindestens einen ersten Verbindungsmittel ausgebildetes zweites Verbindungsmittel, das die Abdeckplatte gegen eine Bewegung relativ zum Grundkörper in Querrichtung sichert. Dadurch kann die Abdeckplatte gegen ein Herausrutschen aus der Öffnung im Grundkörper in Querrichtung auf einfache Weise gesichert sein. Dadurch kann auf einfache Weise sichergestellt werden, dass die Abdeckplatte gegen eine Bewegung relativ zum Grundkörper in Richtung der Mittelachse gesichert ist. Zweckmäßig umfasst das zweite Verbindungsmittel eine Schraube, die zur Mittelachse einen Abstand aufweist. Zweckmäßig ist das aus einem ersten Teil am Grundkörper und einem zweiten Teil an der Abdeckplatte bestehende mindestens eine, insbesondere alle aus einem ersten Teil am Grundkörper und einem zweiten Teil an der Abdeckplatte bestehende erste Verbindungsmittel in einer ersten Hälfte des Federgehäuses angeordnet. Vorteilhaft ist das zweite Verbindungsmittel in einer zweiten Hälfte des Federgehäuses angeordnet. Hierbei verläuft die Querrichtung von der zweiten Hälfte des Federgehäuses zur ersten Hälfte des Federgehäuses.

In vorteilhafter Weiterbildung der Erfindung ist vorgesehen, dass eine um die Mittelachse umlaufende Umfangswand des Federaufnahmeraums einen kleinsten Abstand zur Mittelachse besitzt, und dass im verbundenen Zustand von Abdeckplatte und Grundkörper der Abstand einer Außenkontur der Abdeckplatte zur Mittelachse in einem zusammenhängenden Winkelbereich von mindestens 270°, insbesondere von mindestens 320° kleiner als 110% des kleinsten Abstands der Umfangswand zur Mittelachse ist. Dadurch kann das Federgehäuse in Richtung radial zur Mittelachse platzsparend gestaltet sein. Vorzugsweise ist die radiale Erstreckung des Federgehäuses im Bereich des mindestens einen Fortsatzes geringer als die radiale Erstreckung, die für die Anordnung eines Schraubdoms am Außenumfang des Federgehäuses benötigt wird.

In besonderer Ausgestaltung der Erfindung ist das Federgehäuse einteilig mit einer Seilrolle für ein Anwerfseil zum Anwerfen des Verbrennungsmotors ausgebildet.

Zweckmäßig weist die Seilrolle zur Aufnahme des Anwerfseils eine um die Mittelachse umlaufende Vertiefung mit einem Grund auf. Vorteilhaft folgt die Kontur des Bodens in einem zusammenhängenden Winkelbereich von mindestens 270° einer Kreisform. Zweckmäßig hat der Boden in dem zusammenhängenden Winkelbereich von mindestens 270° einen konstanten Abstand zur Mittelachse. Vorteilhaft folgt die Kontur eines Seitenrands der Vertiefung in dem zusammenhängenden Winkelbereich von mindestens 270° einer Kreisform. Dadurch kann die Vertiefung zur Führung des Seils einer Seilrolle im Bereich des aus einem ersten Teil am Grundkörper und einem zweiten Teil an der Abdeckplatte bestehenden mindestens einen ersten Verbindungsmittels ungestört verlaufen. Im Bereich des mindestens einen ersten Verbindungsmittels, das aus einem ersten Teil am Grundkörper und einem zweiten Teil an der Abdeckplatte besteht, müssen keine Schraubdome angeordnet werden, die möglicherweise in die Vertiefung vorstehen könnten und/oder eine Vergrößerung des Federgehäuseaußendurchmessers bedeuten würden. Dadurch kann das Anwerfseil weitgehend ungestört von Unregelmäßigkeiten platzsparend in der Vertiefung auf- und abgewickelt werden.

Dadurch, dass für die erfindungsgemäßen ersten Verbindungsmittel keine Schraubdome erforderlich sind, kann die Umfangswand des Federaufnahmeraums über einen großen Winkelbereich dünn gestaltet sein, da dort kein Material zur Ausbildung von Schraubdomen erforderlich ist. Dadurch kann das erfindungsgemäße Federgehäuse im Bereich des Kühlluftstroms eines Arbeitsgeräts eingesetzt werden, und es ergibt sich aufgrund der Kompaktheit des Federgehäuses eine gute Kühlluftzufuhr.

Die erfindungsgemäße Anwerfvorrichtung umfasst ein erfindungsgemäßes Federgehäuse. Dadurch kann die Anwerfvorrichtung platzsparend ausgebildet sein.

Ausführungsbeispiele der Erfindung werden im Folgenden anhand der Zeichnung erläutert. Es zeigen:
- Fig. 1: eine schematische Seitenansicht einer Motorkettensäge,
- Fig. 2: eine Explosionsdarstellung einer Anwerfvorrichtung mit einem Federgehäuse,
- Fig. 3: eine Explosionsdarstellung des Federgehäuses aus Fig. 2 mit einem Grundkörper und einer Abdeckplatte,
- Fig. 4 bis Fig. 8: perspektivische Darstellungen des Federgehäuses aus Fig. 3 in verbundenem oder unverbundenem Zustand von Abdeckplatte und Grundkörper,
- Fig. 9 und Fig. 10: Draufsichten von oben auf das Federgehäuse aus Fig. 3 in verbundenem und unverbundenem Zustand von Grundkörper und Abdeckplatte,
- Fig. 11: eine perspektivische Darstellung des Federgehäuses aus Fig. 3,
- Fig. 12: eine Seitenansicht auf die Umfangsseite des Federgehäuses aus Fig. 3,
- Fig. 13: eine schematische Seitenansicht auf die Umfangsseite einer alternativen Ausführung eines Federgehäuses,
- Fig. 14: eine Draufsicht von oben auf das Federgehäuse aus Fig. 3 in verbundenem Zustand von Grundkörper und Abdeckplatte,
- Fig. 15: einen Schnitt entlang der in Fig. 14 eingezeichneten Schnittebene XV-XV,
- Fig. 16: eine Detaildarstellung des in Fig. 15 mit XVI gekennzeichneten Bereichs,
- Fig. 17: einen Schnitt entlang der in Fig. 14 mit XVII-XVII gekennzeichneten Schnittebene,
- Fig. 18: eine Detaildarstellung des in Fig. 17 mit XVIII gekennzeichneten Bereichs.

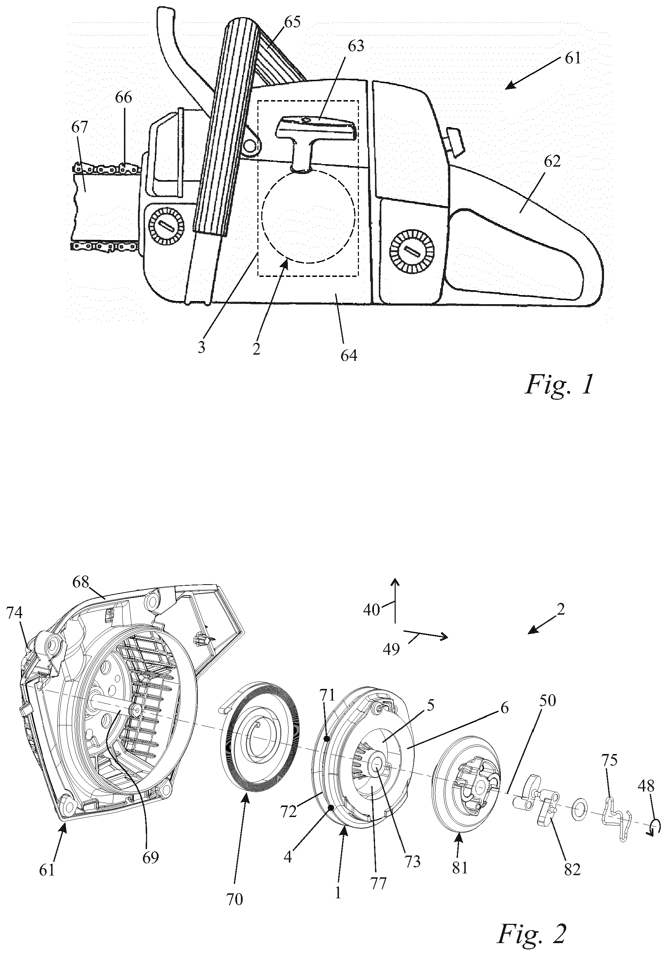

Fig. 1 zeigt ein handgeführtes Arbeitsgerät 61, im Ausführungsbeispiel eine Motorkettensäge. Die vorliegende Erfindung kann auch für ein anderes handgeführtes Arbeitsgerät, beispielsweise für ein Blasgerät, einen Freischneider, einen Trennschleifer oder dergleichen vorgesehen sein. Das handgeführte Arbeitsgerät 61 weist ein Gehäuse 64 auf, in dem ein schematisch dargestellter Verbrennungsmotor 3 angeordnet ist. Der Verbrennungsmotor 3 ist vorzugsweise ein Einzylindermotor, insbesondere ein Zweitaktmotor oder ein gemischgeschmierter Viertaktmotor. Der Verbrennungsmotor 3 dient zum Antrieb eines Werkzeugs. Im Ausführungsbeispiel ist das Werkzeug eine um eine Führungsschiene 67 umlaufend angetriebene Sägekette 66. Zum Führen des Arbeitsgeräts 61 dienen ein Handgriff 62 sowie ein Griffrohr 65. Zum Anwerfen des Verbrennungsmotors 3 ist eine Anwerfvorrichtung 2 vorgesehen, die in Fig. 1 ebenfalls schematisch dargestellt ist. Die Anwerfvorrichtung 2 ist vorzugsweise ein von Hand zu betätigender Seilzugstarter. Die Anwerfvorrichtung 2 umfasst hierzu einen Anwerfgriff 63, der aus dem Gehäuse 64 des Arbeitsgeräts 61 ragt. Die Anwerfvorrichtung 2 kann alternativ oder zusätzlich motorbetrieben sein.

In Fig. 2 ist die Anwerfvorrichtung 2 im Einzelnen dargestellt. Die Anwerfvorrichtung 2 umfasst ein Anwerfergehäuse 68, eine Rückholfeder 70, ein Federgehäuse 1, eine Verbindungsfeder 77 und einen Mitnehmer 81. Das Federgehäuse 1 besitzt im Ausführungsbeispiel eine Seilrolle 72. Die Seilrolle 72 ist integraler Bestandteil des Federgehäuses 1. Auch eine separate Gestaltung von Seilrolle und Federgehäuse kann vorgesehen sein.

Das Anwerfergehäuse 68 weist einen Lagerzapfen 69 auf. Auf dem Lagerzapfen 69 sind das Federgehäuse 1 und der Mitnehmer 81 drehbar gelagert. Hierzu weist das Federgehäuse 1 eine Nabe 73 auf. Der Lagerzapfen 69 ist durch die Nabe 73 gesteckt. Das Federgehäuse 1 und damit auch die Seilrolle 72 sind über die Rückholfeder 70 mit dem Anwerfergehäuse 68 verbunden. Die Rückholfeder 70 ist im Ausführungsbeispiel eine Spiralfeder. Die Rückholfeder 70 ist zwischen dem Anwerfergehäuse 68 und dem Federgehäuse 1 in einer nicht dargestellten Rückholfederaufnahme des Federgehäuses 1 angeordnet und an einem Ende mit dem Anwerfergehäuse 68 und an ihrem anderen Ende mit dem Federgehäuse 1 drehfest verbunden. Das Federgehäuse 1 ist über die Verbindungsfeder 77 mit dem Mitnehmer 81 verbunden. Die Verbindungsfeder 77 ist vorteilhaft eine Spiralfeder. Die Verbindungsfeder 77 ist zwischen dem Federgehäuse 1 und dem Mitnehmer 81 in einem Federaufnahmeraum 5 des Federgehäuses 1 angeordnet. Die Verbindungsfeder 77 ist auf der der Rückholfederaufnahme abgewandten Seite des Federgehäuses 1 angeordnet.

Die Anwerfvorrichtung 2 dient zum Anwerfen des in Fig. 1 dargestellten Verbrennungsmotors 3. Auf der Seilrolle 72 ist ein in Fig. 2 nicht dargestelltes Anwerfseil aufgewickelt. Ein erstes Ende des Anwerfseils ist an der Seilrolle 72 festgelegt. Ein zweites Ende des Anwerfseils ist durch einen Anwerfstutzen 74 des Anwerfergehäuses 68 aus dem Anwerfergehäuse 68 herausgeführt. Beim Anwerfen des Verbrennungsmotors 3 zieht der Bediener an dem in Fig. 1 dargestellten Anwerfgriff 63, der am zweiten Ende des Anwerfseils fixiert ist. Der Zug am Anwerfseil versetzt die in Fig. 2 dargestellte Seilrolle 72 und damit auch das Federgehäuse 1 in Rotation um eine Drehachse, die im Folgenden als Mittelachse 50 bezeichnet wird. Hierbei dreht sich die Seilrolle 72 um den Lagerzapfen 69. Die Mittelachse 50 erstreckt sich in einer Axialrichtung 49. Die Axialrichtung 49 verläuft von der Rückholfederaufnahme des Federgehäuses 1 in Richtung auf den Federaufnahmeraum 5 zur Aufnahme der Verbindungsfeder 77. Quer, im Ausführungsbeispiel senkrecht zur Mittelachse 50 erstreckt sich eine Querrichtung 40.

Die Rotationsenergie der Seilrolle 72 und des Federgehäuses 1 wird über die Verbindungsfeder 77 auf den Mitnehmer 81 übertragen. Die Verbindungsfeder 77 dient hierbei der Dämpfung von ruckartigen und ungleichmäßigen Zugbewegungen. Es kann auch vorgesehen sein, dass die Verbindungsfeder 77 der Zwischenspeicherung von Energie dient. Dabei kann vorgesehen sein, dass die Verbindungsfeder zunächst durch mehrere Anwerfhübe am Anwerfseil gespannt werden muss, bevor die Verbindungsfeder ihre gespeicherte Energie über den Mitnehmer an eine Kurbelwelle des Verbrennungsmotors abgibt. In diesem Fall ist die Seilrolle typischerweise über einen Freilauf mit dem Federgehäuse verbunden.

Der Mitnehmer 81 besitzt Koppelmittel 82. Im Ausführungsbeispiel sind die Koppelmittel 82 als Klinken ausgebildet. Die Koppelmittel 82 sind schwenkbar am Mitnehmer 81 gelagert. Während des Anwerfens schwenken die Koppelmittel 82 geführt von einer Rastkontur 75 nach außen und wirken mit nicht dargestellten Rastvorsprüngen, die drehfest mit der Kurbelwelle verbunden sind, zusammen, so dass die Kurbelwelle mit dem Mitnehmer 81 mitdreht. Wenn die Kurbelwelle schneller dreht als der Mitnehmer 81, verlieren die Koppelmittel 82 ihren Kontakt zu den Rastvorsprüngen. Zu diesem Zeitpunkt ist der Anwerfvorgang bereits beendet und die Kurbelwelle wird vom Verbrennungsmotor 3 angetrieben.

Durch die Rotation der Seilrolle 72 beim Anwerfhub wird auch die Rückholfeder 70 gespannt. Nach Beendigung eines Anwerfhubs wird die Seilrolle 72 und damit auch das Federgehäuse 1 durch die Rückholfeder 70 entgegen ihrer Rotationsrichtung bei Zug am Anwerfseil in Rotation versetzt, und das Anwerfseil wird wieder auf die Seilrolle 72 aufgewickelt.

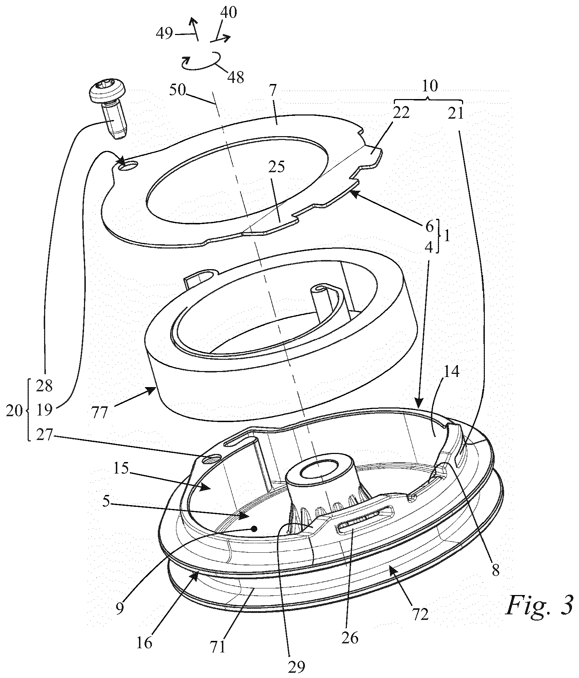

Wie in Fig. 3 dargestellt umfasst das Federgehäuse 1 einen Grundkörper 4 und eine Abdeckplatte 6. Im Grundkörper 4 ist der Federaufnahmeraum 5 ausgebildet. Der Federaufnahmeraum 5 besitzt einen Boden 9. Der Boden 9 erstreckt sich in einer Ebene. Die Mittelachse 50 verläuft senkrecht zur Ebene des Bodens 9 des Federaufnahmeraums 5. Der Federaufnahmeraum 5 besitzt eine Zugangsöffnung 15. Die Zugangsöffnung 15 liegt dem Boden 9 in Axialrichtung 49 gegenüber. Durch die Zugangsöffnung 15 kann die Verbindungsfeder 77 in den Federaufnahmeraum 5 eingeführt werden. Die Zugangsöffnung 15 erstreckt sich radial zur Mittelachse 50 vorteilhaft bis zu einer Umfangswand 14 des Federaufnahmeraums 5. Die Mittelachse 50 ist die Drehachse, um die sich das Federgehäuse 1 im Betrieb der Anwerfvorrichtung 2 dreht. Die Mittelachse 50 verläuft durch die Zugangsöffnung 15. Zum Schutz gegen Verschmutzung und für eine sichere Lagerung der Verbindungsfeder 77 kann die Abdeckplatte 6 auf dem Grundkörper 4 des Federgehäuses 1 angeordnet werden.

Der Grundkörper 4 besitzt einen um die Mittelachse 50 umlaufenden äußeren Umfangsrand 16. Der äußere Umfangsrand 16 läuft in Umfangsrichtung 48 um die Mittelachse 50 um. Im Umfangsrand 16 ist eine umlaufende Vertiefung 71 angeordnet. Durch die umlaufende Vertiefung 71 im Umfangsrand 16 des Federgehäuses 1 ist die Aufnahme der Seilrolle 72 für das Anwerfseil gebildet. Durch die Vertiefung 71 ist der Umfangsrand 16 entgegen einer Richtung radial zur Mittelachse 50 vertieft.

In Axialrichtung 49 benachbart zur Vertiefung 71 ist eine Öffnung 21 im Grundkörper 4 angeordnet. Die Öffnung 21 durchdringt den Grundkörper 4 im Ausführungsbeispiel in Querrichtung 40 vollständig. Die Öffnung 21 ist in einer Außenwand 29 des Grundkörpers 4 angeordnet. Die Außenwand 29 läuft um die Mittelachse 50 um. Die Öffnung 21 durchdringt die Außenwand 29 in Querrichtung 40 vollständig. Die Öffnung 21 ist in Axialrichtung 49 zumindest teilweise außerhalb des Federaufnahmeraums 5 angeordnet. Im Ausführungsbeispiel verläuft die Außenwand 29 in Verlängerung zu der Umfangswand 14 des Federaufnahmeraums 5. Die Öffnung 21 schließt in Axialrichtung 49 an den Federaufnahmeraum 5 bzw. an dessen Umfangswand 14 an.

Die Abdeckplatte 6 besitzt einen Fortsatz 22. Der Fortsatz 22 ist Teil eines ersten Verbindungsmittels 10, das ausschließlich aus dem Grundkörper 4 und der Abdeckplatte 6 besteht. Der Begriff "Fortsatz" bezieht sich ausschließlich auf den Teil der Abdeckplatte 6, der mit dem Grundkörper 4 das erste Verbindungsmittel 10 bildet. Der Fortsatz 22 steht über einen Abdeckkörper 7 der Abdeckplatte 6 hervor. Der Abdeckkörper 7 der Abdeckplatte 6 ist der Bereich der Abdeckplatte 6, der die Zugangsöffnung 15 des Federaufnahmeraums 5 abdeckt. Der Fortsatz 22 der Abdeckplatte 6 korrespondiert hinsichtlich seiner Position und Größe mit der Öffnung 21 des Grundkörpers 4. Der Fortsatz 22 kann in die Öffnung 21 gesteckt werden. Dadurch sind die Abdeckplatte 6 und der Grundkörper 4 miteinander verbindbar. Durch die Öffnung 21 ist ein erster Teil am Grundkörper 4 gebildet, der gemeinsam mit einem durch den Fortsatz 22 gebildeten zweiten Teil an der Abdeckplatte 6 das erste Verbindungsmittel 10 bildet. Das erste Verbindungsmittel 10 sichert im verbundenen Zustand von Grundkörper 4 und Abdeckplatte 6 die Abdeckplatte 6 gegen eine Bewegung relativ zum Grundkörper 4 in Richtung der Mittelachse 50 des Federgehäuses 1.

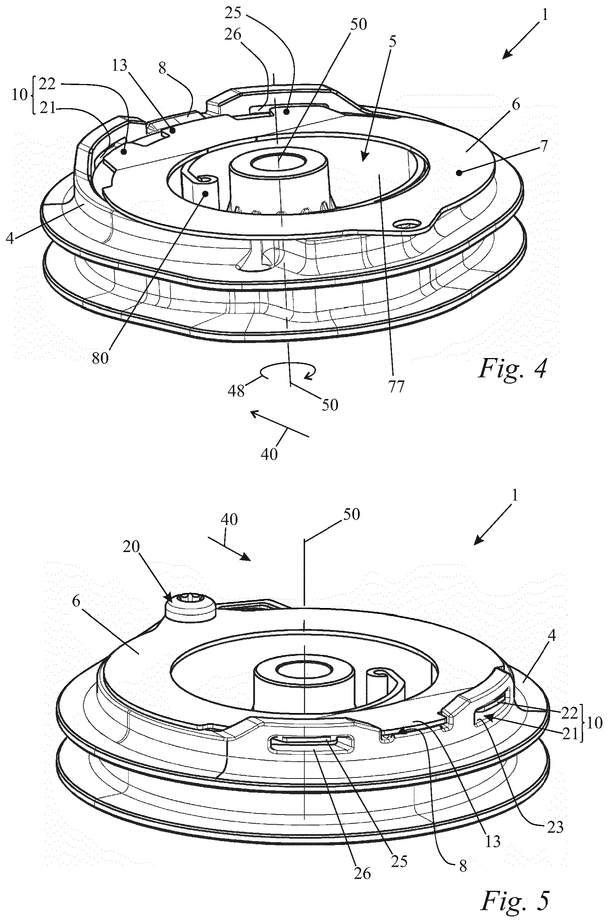

Die Fig. 4 bis 10 zeigen, wie die Abdeckplatte 6 in den Grundkörper 4 gesteckt wird. Hierbei wird der Grundkörper 4 mit der Abdeckplatte 6 durch eine Relativbewegung des ersten Teils des ersten Verbindungsmittels 10 gegenüber dem zweiten Teil des ersten Verbindungsmittels 10 in Querrichtung 40 derart verbunden, dass die Abdeckplatte 6 gegen eine Bewegung relativ zum Grundkörper 4 in Richtung der Mittelachse 50 gesichert ist. Dies wird dadurch erreicht, dass die Abdeckplatte 6 mit ihrem Fortsatz 22 in Querrichtung 40 in die Öffnung 21 des Grundkörpers 4 geschoben wird. Hierzu ist kein Werkzeug erforderlich. Das erste Verbindungsmittel 10 ist werkzeuglos montierbar. Das erste Verbindungsmittel 10 besteht ausschließlich aus dem ersten Teil am Grundkörper 4 und dem zweiten Teil an der Abdeckplatte 6. Insbesondere erfolgt die Sicherung der Abdeckplatte 6 gegen eine Bewegung relativ zum Grundkörper 4 in Richtung der Mittelachse 50 durch das erste Verbindungsmittel 10 schraubenlos. Die Querrichtung 40 entspricht einer Einschubrichtung des Fortsatzes 22 der Abdeckplatte 6 in die Öffnung 21 des Grundkörpers 4.

Beispielsweise die Figuren 5, 7 und 10 zeigen das Federgehäuse 1 in einem verbundenen Zustand von Abdeckplatte 6 und Grundkörper 4. Im verbundenen Zustand von Grundkörper 4 und Abdeckplatte 6 deckt die Abdeckplatte 6 den Federaufnahmeraum 5 zumindest teilweise ab. Dadurch ist die Zugangsöffnung 15 des Federaufnahmeraums 5 zumindest teilweise abgedeckt.

Die Abdeckplatte 6 weist in ihrer Mitte eine Durchgangsöffnung 17 auf. Im verbundenen Zustand von Abdeckplatte 6 und Grundkörper 4 verläuft die Mittelachse 50 durch die Durchgangsöffnung 17. Die Abdeckplatte 6 umschließt die Durchgangsöffnung 17 vorteilhaft vollständig. Der in Fig. 2 dargestellte Mitnehmer 81 deckt im zusammengebauten Zustand der Anwerfvorrichtung 2 die Durchgangsöffnung 17 der Abdeckplatte 6 bis auf den Bereich der Durchgangsöffnung 17, in dem die Nabe 73 angeordnet ist, vorteilhaft vollständig ab. Im verbundenen Zustand von Grundkörper 4 und Abdeckplatte 6 ist auf diese Weise der Federaufnahmeraum 5 fast vollständig verschlossen.

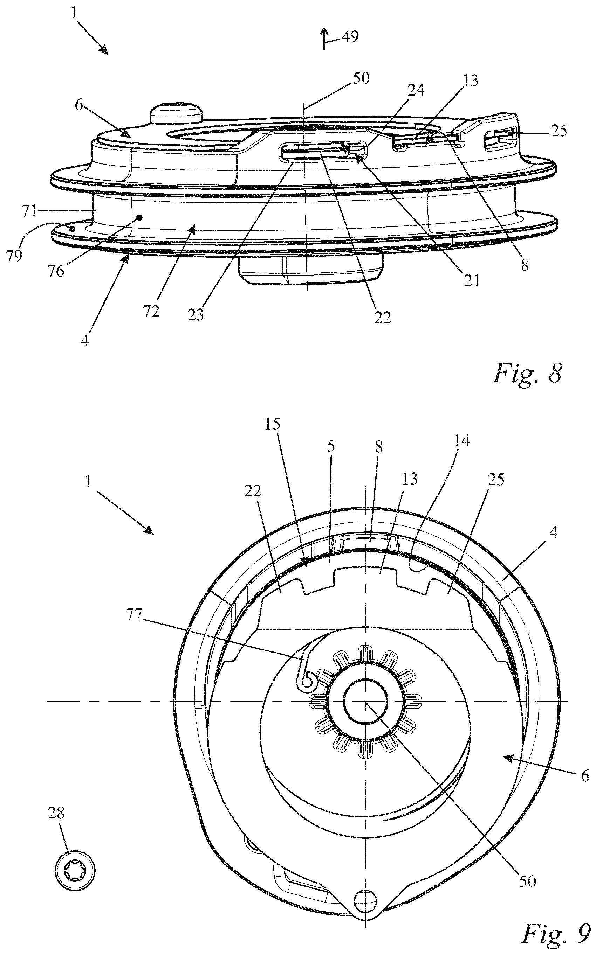

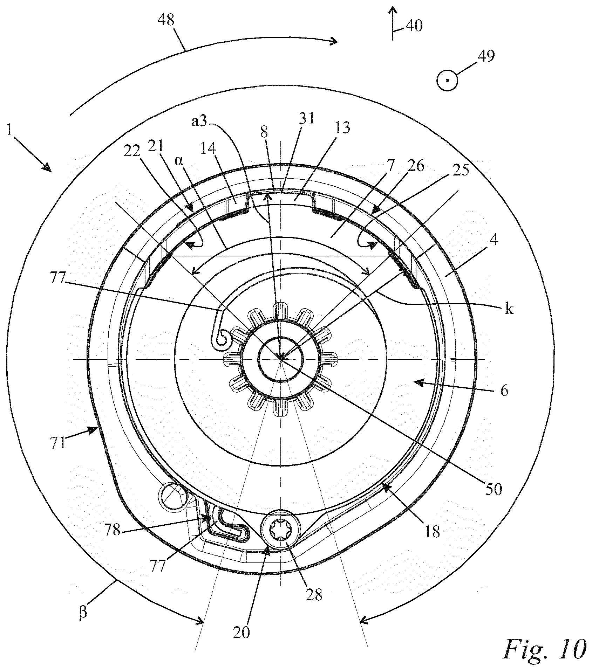

Wie sich aus der Zusammenschau der Fig. 9 und 10 ergibt, steht der Fortsatz 22 im in Fig. 10 dargestellten verbundenen Zustand von Abdeckplatte 6 und Grundkörper 4 in Querrichtung 40 über den Federaufnahmeraum 5 hervor. Wie in den Fig. 5 und 8 dargestellt, ragt der Fortsatz 22 der Abdeckplatte 6 im verbundenen Zustand von Grundkörper 4 und Abdeckplatte 6 in die Öffnung 21 im Grundkörper 4. Die Öffnung 21 weist einen geschlossen umlaufenden Rand 23 auf. Der Rand 23 der Öffnung 21 läuft um die Querrichtung 40 um. Im verbundenen Zustand von Grundkörper 4 und Abdeckplatte 6 ist der Fortsatz 22 gegen den Rand 23 der Öffnung 21 vorgespannt. Zur Vorspannung des Fortsatzes 22 gegen den Rand 23 der Öffnung 21 in Richtung der Mittelachse 50 ist das Federgehäuse 1 derart gestaltet, dass der Fortsatz 22 der Abdeckplatte 6 in der Öffnung 21 mit einer Oberseite 11 der Abdeckplatte am Rand 23 der Öffnung 21 anliegt, und dass gleichzeitig die Abdeckplatte 6 außerhalb der Öffnung 21 mit einer Unterseite 12 der Abdeckplatte 6 auf einer Auflagefläche 8 des Grundkörpers 4 aufliegt. Die Abdeckplatte 6 hat im verbundenen Zustand des Grundkörpers 4 und der Abdeckplatte 6 sowohl mit ihrer Unterseite 12 als auch mit ihrer Oberseite 11 Kontakt zum Grundkörper 4. Durch den beidseitigen Kontakt ist die Abdeckplatte 6 in Richtung der Mittelachse 50 fixiert. Die Oberseite 11 der Abdeckplatte 6 ist im verbundenen Zustand des Grundkörpers 4 und der Abdeckplatte 6 dem Boden 9 des Federaufnahmeraums 5 abgewandt. Die Unterseite 12 der Abdeckplatte 6 ist im verbundenen Zustand des Grundkörpers 4 und der Abdeckplatte 6 dem Boden 9 des Federaufnahmeraums 5 des Grundkörpers 4 zugewandt.

In den Ausführungsbeispielen weist die Abdeckplatte 6 einen Spannfortsatz 13 auf. Der Spannfortsatz 13 der Abdeckplatte 6 ragt über den Abdeckkörper 7 der Abdeckplatte 6 vor. Wie in Fig. 10 dargestellt, deckt der Abdeckkörper 7 der Abdeckplatte 6 im verbundenen Zustand von Grundkörper 4 und Abdeckplatte 6 die in Fig. 9 dargestellte Zugangsöffnung 15 des Federaufnahmeraums 5 zumindest teilweise ab. Der Teil der Abdeckplatte 6, der im verbundenen Zustand des Grundkörpers 4 und der Abdeckplatte 6 in Richtung der Mittelachse 50 gesehen über den Federaufnahmeraum 5 hervorsteht, zählt nicht zum Abdeckkörper 7 dazu. Anders ausgedrückt wird der Abdeckkörper 7 lediglich durch den Teil der Abdeckplatte 6 gebildet, der in Ansicht in Richtung der Längsachse 50 nicht über den Federaufnahmeraum 5 hervorsteht.

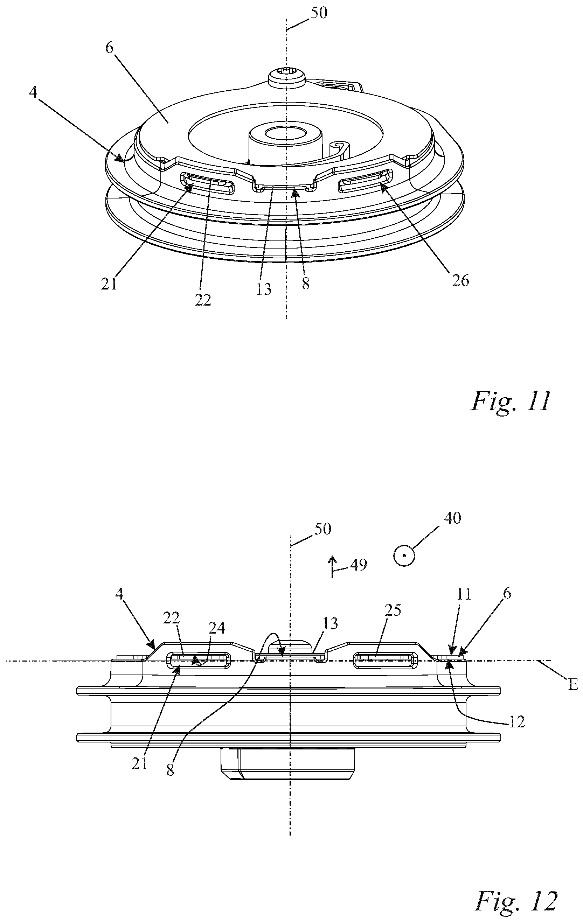

Wie in Fig. 10 dargestellt, steht der Spannfortsatz 13 in Querrichtung 40 über den Abdeckkörper 7 der Abdeckplatte 6 hervor. In den Ausführungsbeispielen liegt die Unterseite 12 der Abdeckplatte 6 im verbundenen Zustand des Grundkörpers 4 und der Abdeckplatte 6 mit dem Spannfortsatz 13 der Abdeckplatte 6 auf der Auflagefläche 8 des Grundkörpers 4 auf. Es kann auch vorgesehen sein, dass der in die Öffnung 21 gesteckte Fortsatz 22 mit der Unterseite 12 am Rand 23 der Öffnung 21 anliegt. In diesem Fall liegt die Abdeckplatte 6 außerhalb der Öffnung 21 mit ihrer Oberseite an einem Vorsprung oder einer Öffnung des Grundkörpers 4 an. In jedem Fall wird der durch die Öffnung 21 gesteckte Fortsatz 22 in Richtung der Mittelachse 50, also entweder in Axialrichtung 49 oder entgegen der Axialrichtung 49, relativ zu dem Teil der Abdeckplatte 6, der außerhalb der Öffnung 21 am Grundkörper 4 anliegt, vorgespannt. Dies kann beispielsweise wie in den Figuren 11 und 12 näher dargestellt realisiert sein.

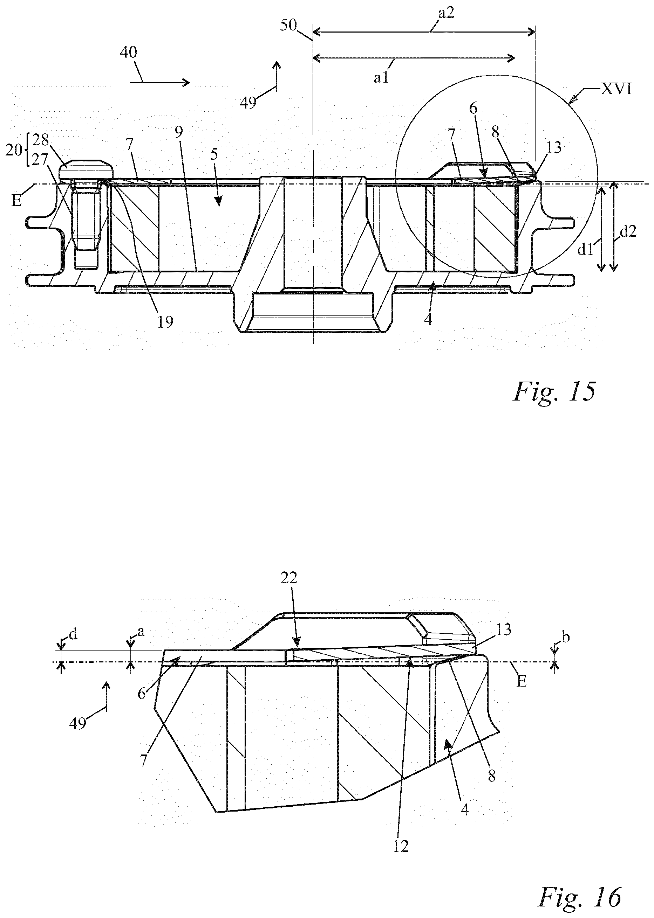

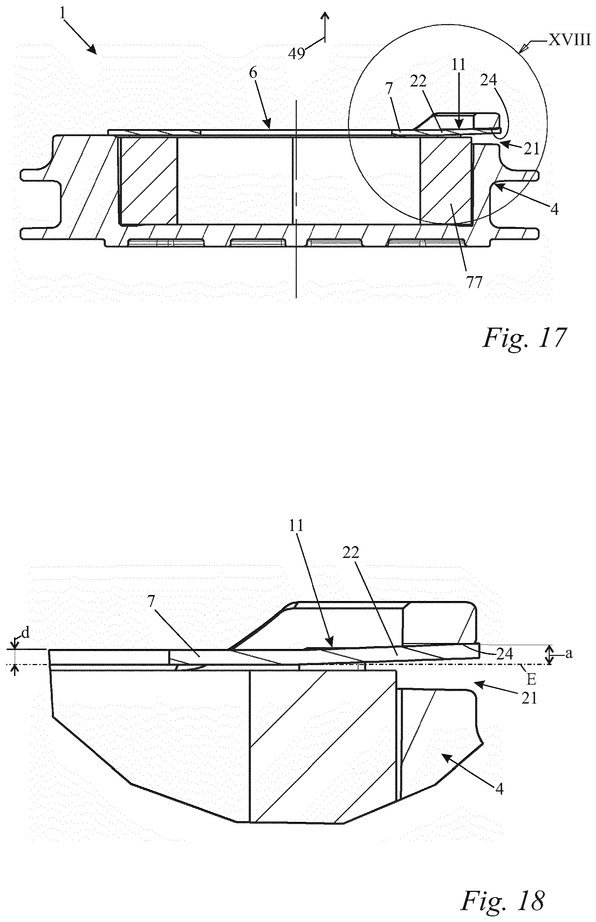

Wie in Fig. 12 dargestellt, weist der Rand 23 der Öffnung 21 im Grundkörper 4 eine Fortsatzanlagefläche 24 auf. Die Fortsatzanlagefläche 24 ist dem Boden 9 des Federaufnahmeraums 5 zugewandt. Die Fortsatzanlagefläche 24 ist in dem Teil des Rands 23 der Öffnung 21 ausgebildet, der am weitesten entfernt zum Boden 9 des Federaufnahmeraums 5 liegt. Die Fortsatzanlagefläche 24 verläuft vorteilhaft parallel zum Boden 9 des Federaufnahmeraums 5. Die Oberseite 11 des Fortsatzes 22 der Abdeckplatte 6 liegt an der Fortsatzanlagefläche 24 in einem Fortsatzkontaktbereich an. Die Fortsatzanlagefläche 24 verläuft quer, im Ausführungsbeispiel senkrecht zur Axialrichtung 49 der Mittelachse 50. Entgegen der Axialrichtung 49 ist die Abdeckplatte 6 im verbundenen Zustand von Grundkörper 4 und Abdeckplatte 6 von einer gedachten Ebene E begrenzt. Die gedachte Ebene E verläuft senkrecht zur Mittelachse 50. Die gedachte Ebene E ist auch in den Figuren 16 und 18 dargestellt.

Wie in Fig. 18 dargestellt, weist der Fortsatzkontaktbereich der Fortsatzanlagefläche 24 einen kleinsten Abstand a zur gedachten Ebene E auf.

Die Abdeckplatte 6 liegt in einem Spannkontaktbereich auf der in den Figuren 12 und 16 dargestellten Auflagefläche 8 des Grundkörpers 4 auf. Der Spannkontaktbereich der Auflagefläche 8 des Grundkörpers 4 weist einen größten Abstand b zur gedachten Ebene E auf (Fig. 16). Der größte Abstand b des Spannkontaktbereichs der Auflagefläche 8 zur gedachten Ebene E ist im Ausführungsbeispiel kleiner als der kleinste Abstand a des Fortsatzkontaktbereichs der Fortsatzanlagefläche 24 zur gedachten Ebene E. Die Abdeckplatte 6 besitzt eine in den Figuren 16 und 18 dargestellte Dicke d. Die Dicke d der Abdeckplatte 6 ist im Ausführungsbeispiel konstant. Die Summe aus der Dicke d der Abdeckplatte 6 und dem größten Abstand b zwischen dem Spannkontaktbereich der Auflagefläche 8 und der gedachten Ebene E entspricht mindestens dem kleinsten Abstand a zwischen dem Fortsatzkontaktbereich der Fortsatzanlagefläche 24 und der gedachten Ebene E. Dadurch ist sichergestellt, dass der Fortsatz 22 mit seiner Oberseite 11 im verbundenen Zustand von Grundkörper 4 und Abdeckplatte 6 in Axialrichtung 49 gegen die Fortsatzanlagefläche 24 des Rands 23 der Öffnung 21 des Grundkörpers 4 vorgespannt ist. Auf diese Weise ist die Abdeckplatte 6 mit dem Fortsatz 22 in der Öffnung 21 des Grundkörpers 4 verklemmt. Dadurch ist die Abdeckplatte 6 gegen ein ungewolltes Herausziehen aus der Öffnung 21 des Grundkörpers 4 entgegen der Querrichtung 40 vorfixiert. Bei einer Rotation des Federgehäuses 1 wird durch die Verklemmung der Abdeckplatte 6 im Grundkörper 4 verhindert, dass die Abdeckplatte 6 vibriert. Dadurch wird der Verschleiß reduziert.

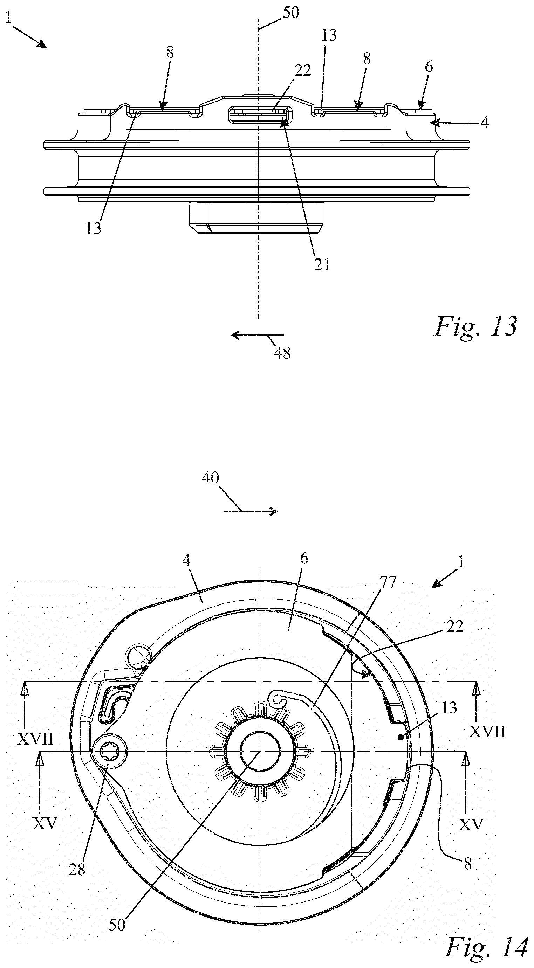

Fig. 15 zeigt einen Schnitt entlang der in Fig. 14 eingezeichneten Schnittebene XV-XV. Die Schnittebene XV-XV enthält die Auflagefläche 8 und verläuft durch die Mittelachse 50. Die Schnittebene XV-XV enthält zudem ein zweites Verbindungsmittel 20. Wie in Fig. 15 ersichtlich, verläuft die Auflagefläche 8 geneigt zu der gedachten Ebene E. Die Auflagefläche 8 weist einen in Querrichtung 40 gemessenen kleinsten Abstand a1 zur Mittelachse 50 auf. Die Auflagefläche 8 weist einen in Querrichtung 40 gemessenen größten Abstand a2 zur Mittelachse 50 auf. Die Auflagefläche 8 weist einen in Axialrichtung 49 gemessenen kleinsten Abstand d1 zum Boden 9 des Federaufnahmeraums 5 auf. Die Auflagefläche 8 weist einen in Axialrichtung 49 gemessenen größten Abstand d2 zum Boden 9 des Federaufnahmeraums 5 auf. Die Auflagefläche 8 weist ihren größten Abstand d2 zum Boden 9 an der Stelle des größten Abstands a2 zur Mittelachse 50 auf. Die Auflagefläche 8 weist ihren kleinsten Abstand d1 zum Boden 9 an der Stelle des kleinsten Abstands a1 zur Mittelachse 50 auf. Der in Axialrichtung 49 gemessene Abstand d1, d2 zwischen dem Boden 9 des Federaufnahmeraums 5 und der Auflagefläche 8 nimmt insbesondere mit zunehmendem Abstand a1, a2 zur Mittelachse 50 zu. Diese Zunahme erfolgt vorteilhaft kontinuierlich. Durch diese Neigung der Auflagefläche 8 kann der Spannfortsatz 13 auf einfache Weise in Querrichtung 40 auf die Auflagefläche 8 geschoben werden. Wie in Fig. 15 dargestellt, wird der Spannfortsatz 13 hierbei in Axialrichtung 49 im Vergleich zum Abdeckkörper 7 der Abdeckplatte 6 angehoben. Dies ist auch der Detaildarstellung nach Fig. 16 zu entnehmen. Der Spannfortsatz 13 liegt mit seiner Unterseite 12 auf der Auflagefläche 8 des Grundkörpers 4 auf. Die Auflagefläche 8 weist an ihrem größten Abstand d2 zum Boden 9 einen axialen Abstand zur gedachten Ebene E auf. Die Auflagefläche 8 kann auch einen Abschnitt umfassen, in dem die Fläche parallel zur Ebene E verläuft. In diesem Fall liegt der Spannfortsatz 13 der Abdeckplatte 6 im verbundenen Zustand von Grundkörper 4 und Abdeckplatte 6 zumindest am Übergang zwischen dem gegenüber der gedachten Ebene E geneigten Bereich und dem Abschnitt, in dem die Auflagefläche 8 parallel zur Ebene E verläuft, an der Auflagefläche 8 an.

Die Fig. 17 zeigt einen Schnitt entlang der in Fig. 14 dargestellten Schnittebene XVII-XVII. Die Schnittebene XVII-XVII verläuft in Querrichtung 40 und enthält den Fortsatz 22. Die Schnittebene XVII-XVII verläuft parallel zur Schnittebene XV-XV. Die Schnittebene XVII-XVII enthält nicht die Mittelachse 50. Wie in den Fig. 17 und 18 dargestellt, liegt der Fortsatz 22 mit seiner Oberseite 11 an der Fortsatzanlagefläche 24 des Rands 23 der Öffnung 21 des Grundkörpers 4 an. Aufgrund der in den Fig. 15 und 16 dargestellten geneigten Auflagefläche 8, die den Spannfortsatz 13 in Axialrichtung 49 nach oben drückt, wird der Fortsatz 22 in Axialrichtung 49 gegen die Fortsatzanlagefläche 24 gepresst. Eine Bewegung des Fortsatzes 22 in Axialrichtung 49 ist durch die Fortsatzanlagefläche 24 begrenzt. Dadurch wird der Abdeckkörper 7 auf dem Grundkörper 4 gehalten.

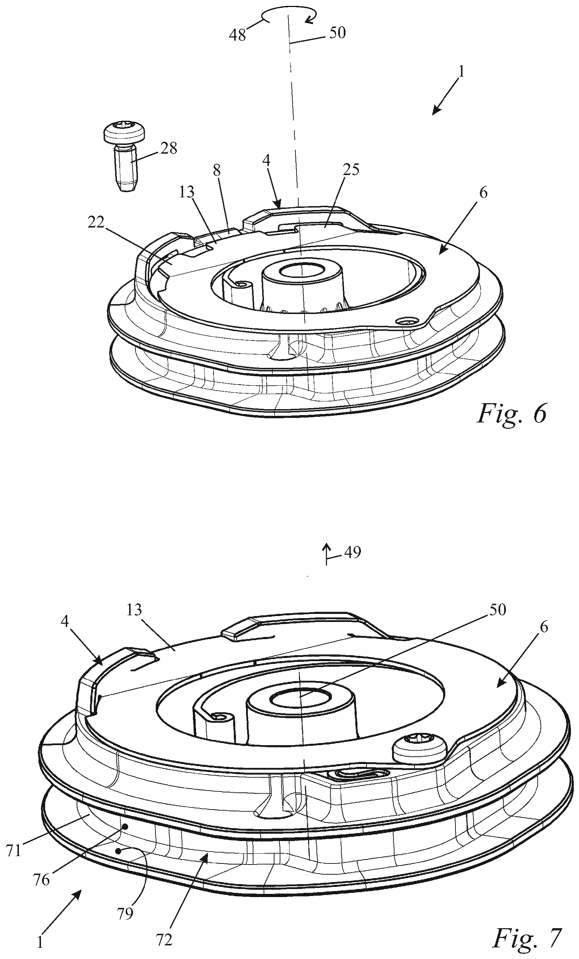

Dies ist insbesondere der Fall, wenn - wie in allen Ausführungsbeispielen mit Ausnahme des Ausführungsbeispiels nach Fig. 13 - an der Abdeckplatte 6 ein zweiter Fortsatz 25 und im Grundkörper 4 eine zweite Öffnung 26 vorgesehen sind. Dies ist beispielsweise in den Fig. 6 und 10 gut zu erkennen. In Umfangsrichtung 48 ist die Auflagefläche 8 zwischen der Öffnung 21 und der zweiten Öffnung 26 angeordnet. Im verbundenen Zustand von Grundkörper 4 und Abdeckplatte 6 liegt die Oberseite 11 der Abdeckplatte 6 im Bereich des zweiten Fortsatzes 25 an der zweiten Öffnung 26 an, wie für den Fortsatz 22 bezüglich der Öffnung 21 beschrieben. Der zweite Fortsatz 22 korrespondiert mit der Öffnung 26. Die Abdeckplatte 6 ist im verbundenen Zustand von Grundkörper 4 und Abdeckplatte 6, wie in Fig. 10 ersichtlich, bezüglich einer von der Querrichtung 40 und der Axialrichtung 49 aufgespannten Ebene, die die Mittelachse 50 enthält, vorteilhaft spiegelsymmetrisch. Entsprechend ist die Auflagefläche 8 für den Spannfortsatz 13 in Umfangsrichtung 4 spiegelsymmetrisch zwischen den beiden Öffnungen 21 und 26 angeordnet. Die Abdeckplatte 6 ist wendbar montierbar. Die Unterseite 12 der Abdeckplatte 6 kann nach Wendung der Abdeckplatte 6 als Oberseite der Abdeckplatte 6 fungieren. Die Abdeckplatte 6 kann sowohl mit dem Federaufnahmeraum 5 zugewandter Unterseite 12 als auch mit dem Federaufnahmeraum 5 abgewandter Unterseite 12 auf dem Grundkörper 4 montiert werden.

Die Auflagefläche 8 besitzt bezüglich der Umfangsrichtung 48 eine Mitte 31. Die Querrichtung 40 verläuft ausgehend von der Mittelachse 50 in Richtung auf die Mitte 31. Die beiden Öffnungen 21 und 26 sind ebenfalls spiegelsymmetrisch bezüglich der von der Querrichtung 40 und der Axialrichtung 49 aufgespannten Ebene, die die Mittelachse 50 enthält. Durch die geometrische Ausgestaltung der Abdeckplatte 6 und der entsprechenden Anordnung der beiden Öffnungen 21 und 26 im Grundkörper 4 wird ein Kippen der Abdeckplatte 6 um eine Achse in Querrichtung 40 beim Vorspannen der Fortsätze 22 und 25 unterbunden. Die Abdeckplatte 6 ist zumindest bezüglich funktionsrelevanter Konturen spiegelsymmetrisch. Die Symmetrieachse der Abdeckplatte 6 ist in Querrichtung 40 orientiert. Die Abdeckplatte 6 ist auf diese Weise 180° um die Querrichtung 40 gewendet montierbar.

Die zueinander benachbarten Fortsätze 22 und 25 sind in einem in verbundenem Zustand von Abdeckplatte 6 und Grundkörper 4 bezüglich der Mittelachse 50 gemessenen Umfangswinkelbereich α von kleiner als 180° auf der Abdeckplatte 6 angeordnet. Der Umfangswinkelbereich α ist in einer Ebene senkrecht zur Mittelachse 50 gemessen. Alle Fortsätze 22, 25 erstrecken sich demnach in einer Hälfte der Abdeckplatte 6. Vorzugsweise erstrecken sich alle Fortsätze 22, 25 und alle Spannfortsätze 13 in einer Hälfte der Abdeckplatte in dem angegebenen Umfangswinkelbereich α. Bevorzugt ist der zusammenhängende Umfangswinkelbereich α kleiner als 135°. Im Ausführungsbeispiel ist der zusammenhängende Umfangswinkelbereich α kleiner als 100°. Dadurch kann die Abdeckplatte 6 derart gestaltet sein, dass sie sich auf einfache Weise in Querrichtung 40 in die Öffnungen 21 und 26 einschieben lässt. Zu diesem Zweck sind die Fortsätze 22 und 25 derart geformt und angeordnet, dass sie sich in die Öffnungen 21 und 26 in Querrichtung 40 einschieben lassen.

Wie sich aus einer Zusammenschau der Fig. 9 und 10 ergibt, ist der Federaufnahmeraum 5 in Richtung radial zur Mittelachse 50 von der Umfangswand 14 des Grundkörpers 4 begrenzt. Die Umfangswand 14 des Federaufnahmeraums 5 läuft um die Mittelachse 50 um. Wie in Fig. 10 dargestellt, besitzt die Umfangswand 14 einen kleinsten Abstand k zur Mittelachse 50. Die Abdeckplatte 6 ist in Richtung radial zur Mittelachse 50 von einer Außenkontur 18 der Abdeckplatte 6 begrenzt. Die Außenkontur 18 der Abdeckplatte 6 läuft im verbundenen Zustand der Abdeckplatte 6 und des Grundkörpers 4 um die Mittelachse 50 um. Im verbundenen Zustand von Abdeckplatte 6 und Grundkörper 4 ist ein Abstand a3 der Außenkontur 18 der Abdeckplatte 6 zur Mittelachse 50 in einem zusammenhängenden Umfangswinkelbereich β von mindestens 270° kleiner als 120% des kleinsten Abstands k. Im Ausführungsbeispiel ist der Abstand a3 der Außenkontur 18 der Abdeckplatte 6 zur Mittelachse 50 in einem zusammenhängenden Umfangswinkelbereich β von mindestens 320° kleiner als 110% des kleinsten Abstands k. In dem zusammenhängenden Winkelbereich β sind keine Löcher zur Durchführung von Schrauben in der Abdeckplatte 6 vorgesehen. Dadurch kann die Abdeckplatte 6 im zusammenhängenden Winkelbereich β in Richtung radial zur Mittelachse 50 kompakt gestaltet sein.

Wie in den Figuren 7 und 8 dargestellt, weist die Vertiefung 71 der Seilrolle 72 einen Grund 76 auf. Die Vertiefung 71 weist einen Seitenrand 79 auf. Der Seitenrand 79 grenzt an den Grund 76 an. Der Seitenrand 79 begrenzt die Vertiefung 71 in Richtung entgegen der Axialrichtung 49. Aus der Zusammenschau der Figuren 7, 8 und 10 ist ersichtlich, dass die Kontur des Grunds 76 in dem zusammenhängenden Winkelbereich β von mindestens 270° einer Kreisform folgt. Aus der Zusammenschau der Figuren 7, 8 und 10 ist ersichtlich, dass die Kontur des Seitenrands 79 in dem zusammenhängenden Winkelbereich β von mindestens 270° einer Kreisform folgt.

Wie in Fig. 10 dargestellt, steht der Fortsatz 22, bzw. der zweite Fortsatz 25, des ersten Verbindungsmittels 10 in dem zusammenhängenden Winkelbereich β von mindestens 270° in Richtung radial zur Mittelachse 50 nicht über eine äußere Umfangswand des Grundkörpers 4 des Federgehäuses 1 hervor. Insbesondere endet der Fortsatz 22, bzw. der zweite Fortsatz 25, 10 in dem zusammenhängenden Winkelbereich β von mindestens 270° innerhalb der Wandstärke der Außenwand 29 des Grundkörpers 4.

Wie beispielsweise in Fig. 15 dargestellt, umfasst das Federgehäuse 1 außer dem von dem ersten Teil am Grundkörper 4 und dem zweiten Teil an der Abdeckplatte 6 gebildeten ersten Verbindungsmittel 10 das zweite Verbindungsmittel 20. Das zweite Verbindungsmittel 20 sichert die Abdeckplatte 6 gegen eine Bewegung relativ zum Grundkörper in Querrichtung 40. Das zweite Verbindungsmittel 20 umfasst ein weiteres Befestigungselement. Das weitere Befestigungselement ist separat vom Grundkörper 4 und separat von der Abdeckplatte 6 ausgebildet. Das weitere Befestigungselement umfasst im Ausführungsbeispiel eine Schraube 28. Es kann aber auch jedes andere zweite Verbindungsmittel vorgesehen sein, das die Abdeckplatte 6 gegen eine Bewegung relativ zum Grundkörper in Querrichtung 40 sichert, beispielsweise eine stoffschlüssige Verbindung oder eine Verbindung durch Heißverstemmen. Die Schraube 28 weist einen Abstand zur Mittelachse 50 auf. Der Grundkörper 4 weist ein Innengewinde 27 auf. Das Innengewinde 27 ist zur Aufnahme der Schraube 28 vorgesehen. Die Abdeckplatte 6 weist ein Loch 19 zur Durchführung der Schraube 28 auf. Im verbundenen Zustand von Grundkörper 4 und Abdeckplatte 26 korrespondiert die Position des Lochs 19 in der Abdeckplatte 6 mit der Position des Innengewindes 27 im Grundkörper 4. Im verbundenen Zustand von Grundkörper 4 und Abdeckplatte 6 kann die Schraube 27 durch das Loch 19 der Abdeckplatte 6 in das Innengewinde 27 des Grundkörpers 24 geschraubt werden. Auf diese Weise sichert die Schraube 27 die Abdeckplatte 6 gegen eine Bewegung entgegen der Querrichtung 40. Dadurch wird die Abdeckplatte zusätzlich zu ihrer Verklemmung in den Öffnungen 21 und 26 gegen ein Herausziehen der Abdeckplatte 6 aus den Öffnungen 21 und 26 entgegen der Querrichtung 40 gesichert. Ist mindestens ein zweites Verbindungsmittel 20 vorgesehen, so kann die Verspannung der Abdeckplatte 6 gegenüber dem Grundkörper 4 auch entfallen. Der mindestens eine Fortsatz kann demnach auch lose in die mindestens eine Öffnung eingeschoben sein. In den Ausführungsbeispielen ist das Innengewinde 27 der Auflagefläche 8 entgegen der Querrichtung 40 bezüglich der Mittelachse 50 gegenüberliegend im Grundkörper 4 angeordnet. Die aus einem ersten Teil am Grundkörper 4 und aus einem zweiten Teil an der Abdeckplatte 6 bestehenden ersten Verbindungsmittel 10 und das ein weiteres Befestigungselement umfassende zweite Verbindungsmittel 20 sind vorteilhaft so angeordnet, dass bei einer Rotation des Federgehäuses 1 um die Mittelachse 50 keine oder nur eine geringe Unwucht entsteht. In Fig. 10 ist ersichtlich, dass die Materialanhäufung des Grundkörpers 4 zur Bildung der Öffnung 21, bzw. der Öffnung 26 gegenüberliegend zu der Materialanhäufung des Grundkörpers 4 zur Bildung einer Einhängestelle 78 für die Verbindungsfeder 77 und ggf. eines Seilknotens angeordnet ist.

Der Schraubdom für das zweite Verbindungsmittel 20 ist in einem Winkelbereich des Federgehäuses 1 angeordnet, in dem der Federgehäusedurchmesser ohnehin aufgrund der als Einhängeschlitz ausgebildeten Einhängstelle 78 für die Verbindungsfeder 77 vergrößert ist. Auf diese Weise muss der Federgehäuseradius nicht an einer zusätzlichen Stelle vergrößert werden, wodurch die Kühlluftströmung am Federgehäuse vorbei begünstigt wird.

Fig. 13 zeigt eine alternative Gestaltung des Federgehäuses 1. Beim Federgehäuse nach Fig. 13 ist lediglich eine einzige Öffnung 21 zur Aufnahme eines Fortsatzes im Grundkörper 4 vorgesehen. Auf jeder Seite der Öffnung 21 ist bezüglich der Umfangsrichtung 48 eine Auflagefläche 8 für jeweils einen Spannfortsatz 13 vorgesehen. Die beiden Spannfortsätze 13 sind an derselben Stelle der Abdeckplatte 6 angeordnet wie die beiden Fortsätze 22 und 25 in den Ausführungsbeispielen nach den übrigen Figuren. Die Aussagen zu den beiden Fortsätzen 22 und 25 bezüglich des Ausführungsbeispiels nach den übrigen Figuren gelten bezüglich der Anordnung der beiden Spannfortsätze 13 in analoger Weise. Genauso gelten die Aussagen zu den Öffnungen 21 und 26 für das Ausführungsbeispiel nach den übrigen Figuren bezüglich ihrer Position und Anordnung in analoger Weise für die Auflagefläche 8 des Ausführungsbeispiels nach Fig. 13. Vereinfacht lässt sich sagen, dass im Vergleich zum Ausführungsbeispiel nach den übrigen Figuren im Ausführungsbeispiel nach Fig. 13 die Öffnungen 21 und 26 durch Auflageflächen 28 ersetzt sind und dass die Fortsätze 22 und 25 durch Spannfortsätze 13 ersetzt sind.

Weitere vorteilhafte Ausführungen ergeben sich durch beliebige Kombinationen der Ausführungsbeispiele.

## Patentansprüche

1. Federgehäuse für eine Verbindungsfeder einer Anwerfvorrichtung zum Starten eines Verbrennungsmotors, wobei das Federgehäuse (1) einen Grundkörper (4) mit einem Federaufnahmeraum (5) und eine Abdeckplatte (6) zur mindestens teilweisen Abdeckung des Federaufnahmeraums (5) umfasst, wobei die Abdeckplatte (6) und der Grundkörper (4) über mindestens ein erstes Verbindungsmittel (10) miteinander verbindbar sind, wobei das mindestens eine erste Verbindungsmittel (10) die Abdeckplatte (6) gegen eine Bewegung relativ zum Grundkörper (4) in Richtung einer Mittelachse (50) des Federgehäuses (1) sichert,
**dadurch gekennzeichnet, dass** das mindestens eine erste Verbindungsmittel (10) aus einer Öffnung (21, 26) im Grundkörper (4) und einem mit der Öffnung (21, 26) korrespondierenden Fortsatz (22, 25) der Abdeckplatte (6) besteht, , dass der Fortsatz (22, 25) in die Öffnung (21, 26) steckbar ist, dass der Grundkörper (4) mit der Abdeckplatte (6) durch eine Relativbewegung des Fortsatzes (22, 25) des ersten Verbindungsmittels (10) gegenüber der Öffnung (21, 26) des ersten Verbindungsmittels (10) in einer Querrichtung (40) quer zur Mittelachse (50) derart verbindbar ist, dass die Abdeckplatte (6) gegen eine Bewegung relativ zum Grundkörper (4) in Richtung der Mittelachse (50) gesichert ist, was dadurch erreicht wird, dass die Abdeckplatte (6) mit ihrem Fortsatz (22, 25) in Querrichtung (40) in die Öffnung (21) geschoben wird.

2. Federgehäuse nach Anspruch 1,
**dadurch gekennzeichnet, dass** das mindestens eine erste Verbindungmittel (10) werkzeuglos montierbar ist.

3. Federgehäuse nach Anspruch 1 oder 2,
**dadurch gekennzeichnet, dass** die Öffnung (21, 26) den Grundkörper (4) in Querrichtung (40) quer zur Mittelachse (50) vollständig durchdringt.

4. Federgehäuse nach einem der Ansprüche 1 bis 3,
**dadurch gekennzeichnet, dass** der Fortsatz (22, 25) im verbundenen Zustand von Abdeckplatte (6) und Grundkörper (4) in Querrichtung (40) quer zur Mittelachse (50) über den Federaufnahmeraum (5) hervorsteht.

5. Federgehäuse nach einem der Ansprüche 1 bis 4,
**dadurch gekennzeichnet, dass** mindestens zwei erste Verbindungsmittel (10) vorgesehen sind, die in einem im verbundenen Zustand von Abdeckplatte (6) und Grundkörper (4) bezüglich der Mittelachse (50) gemessenen Umfangswinkelbereich (α) von kleiner als 180° angeordnet sind.

6. Federgehäuse nach einem der Ansprüche 1 bis 5,
**dadurch gekennzeichnet, dass** die Öffnung (21, 26) einen geschlossen umlaufenden Rand (23) besitzt.

7. Federgehäuse nach einem der Ansprüche 1 bis 6,
**dadurch gekennzeichnet, dass** der in die Öffnung (21, 26) eingesteckte Fortsatz (22, 25) gegen den Rand (23) der Öffnung (21, 26) vorgespannt ist.

8. Federgehäuse nach Anspruch 7,
**dadurch gekennzeichnet, dass** der Fortsatz (22, 25) der Abdeckplatte (6) in der Öffnung (21, 26) mit einer Oberseite (11) der Abdeckplatte (6) an einer Fortsatzanlagefläche (24) des Grundkörpers (4) anliegt, und dass die Abdeckplatte (6) außerhalb der Öffnung (21, 26) mit einer Unterseite (12) der Abdeckplatte (6) auf einer Auflagefläche (8) des Grundkörpers (4) aufliegt.

9. Federgehäuse nach Anspruch 8,
**dadurch gekennzeichnet, dass** die Auflagefläche (8) geneigt zu einer gedachten Ebene (E) senkrecht zur Mittelachse (50) verläuft.

10. Federgehäuse nach einem der Ansprüche 1 bis 9,
**dadurch gekennzeichnet, dass** das Federgehäuse (1) außer dem mindestens einen ersten Verbindungsmittel (10) ein zweites Verbindungsmittel (20) umfasst, das die Abdeckplatte (6) gegen eine Bewegung relativ zum Grundkörper (4) in Querrichtung (40) quer zur Mittelachse (50) sichert.

11. Federgehäuse nach einem der Ansprüche 1 bis 10,
**dadurch gekennzeichnet, dass** das zweite Verbindungsmittel (20) eine Schraube (28) umfasst, die zur Mittelachse (50) einen Abstand aufweist.

12. Federgehäuse nach einem der Ansprüche 1 bis 11,
**dadurch gekennzeichnet, dass** das Federgehäuse (1) einteilig mit einer Seilrolle (30) für ein Anwerfseil zum Anwerfen des Verbrennungsmotors (3) ausgebildet ist.

13. Federgehäuse nach Anspruch 12,
**dadurch gekennzeichnet, dass** die Seilrolle (30) zur Aufnahme des Anwerfseils eine um die Mittelachse (50) umlaufende Vertiefung (71) mit einem Grund (76) aufweist, und dass die Kontur des Grunds (76) in einem zusammenhängenden Winkelbereich (β) von mindestens 270° einer Kreisform folgt.

14. Anwerfvorrichtung mit einem Federgehäuse (1) nach einem der Ansprüche 1 bis 13.

## Claims

1. Spring housing for a connecting spring of a starting device for starting a combustion engine, wherein the spring housing (1) comprises a main body (4), with a spring receiving space (5), and a cover plate (6) for at least partially covering the spring receiving space (5), wherein the cover plate (6) and the main body (4) are connectable to one another via at least one first connecting means (10), wherein the at least one first connecting means (10) secures the cover plate (6) against movement relative to the main body (4) in the direction of a central axis (50) of the spring housing (1), **characterized in that** the at least one first connecting means (10) consists of an opening (21, 26) in the main body (4) and an extension (22, 25), corresponding to the opening (21, 26), of the cover plate (6), **in that** the extension (22, 25) is pluggable into the opening (21, 26), **in that** the main body (4) is connectable to the cover plate (6), by way of a relative movement of the extension (22, 25) of the first connecting means (10) with respect to the opening (21, 26) of the first connecting means (10) in a transverse direction (40) transverse to the central axis (50), in such a way that the cover plate (6) is secured against movement relative to the main body (4) in the direction of the central axis (50), which is achieved **in that** the extension (22, 25) of the cover plate (6) is pushed into the opening (21) in the transverse direction (40).

2. Spring housing according to Claim 1,
**characterized in that** the at least one first connecting means (10) is fittable without tools.

3. Spring housing according to Claim 1 or 2,
**characterized in that** the opening (21, 26) extends completely through the main body (4) in the transverse direction (40) transverse to the central axis (50).

4. Spring housing according to one of Claims 1 to 3,
**characterized in that**, in the connected state of the cover plate (6) and the main body (4), the extension (22, 25) protrudes beyond the spring receiving space (5) in the transverse direction (40) transverse to the central axis (50).

5. Spring housing according to one of Claims 1 to 4,
**characterized in that** provision is made of at least two first connecting means (10) which are arranged in a circumferential angle range (α) of less than 180° as measured in relation to the central axis (50) in the connected state of the cover plate (6) and the main body (4).

6. Spring housing according to one of Claims 1 to 5,
**characterized in that** the opening (21, 26) has a closed peripheral edge (23).

7. Spring housing according to one of Claims 1 to 6,
**characterized in that** the extension (22, 25) plugged into the opening (21, 26) is preloaded against the edge (23) of the opening (21, 26).

8. Spring housing according to Claim 7,
**characterized in that** the extension (22, 25) of the cover plate (6), in the opening (21, 26), bears by way of a top side (11) of the cover plate (6) against an extension bearing surface (24) of the main body (4), and **in that** the cover plate (6), outside the opening (21, 26), bears by way of a bottom side (12) of the cover plate (6) on a bearing surface (8) of the main body (4).

9. Spring housing according to Claim 8,
**characterized in that** the bearing surface (8) is inclined in relation to an imaginary plane (E) perpendicular to the central axis (50).

10. Spring housing according to one of Claims 1 to 9,
**characterized in that**, besides the at least one first connecting means (10), the spring housing (1) comprises a second connecting means (20) which secures the cover plate (6) against movement relative to the main body (4) in the transverse direction (40) transverse to the central axis (50).

11. Spring housing according to one of Claims 1 to 10,
**characterized in that** the second connecting means (20) comprises a screw (28) which has a spacing to the central axis (50).

12. Spring housing according to one of Claims 1 to 11,
**characterized in that** the spring housing (1) is formed in one piece with a rope pulley (30) for a starting rope for starting the combustion engine (3).

13. Spring housing according to Claim 12,
**characterized in that** the rope pulley (30), for receiving the starting rope, has a depression (71) which runs around the central axis (50) in an encircling manner and which has a base (76), and **in that** the contour of the base (76) follows a circular shape over a continuous angle range (β) of at least 270°.

14. Starting device having a spring housing (1) according to one of Claims 1 to 13.

## Revendications

1. Boîtier de ressort pour un ressort de liaison d'un dispositif de lancement pour démarrer un moteur à combustion interne, le boîtier de ressort (1) comprenant un corps de base (4) avec un espace de réception de ressort (5) et une plaque de recouvrement (6) pour recouvrir au moins partiellement l'espace de réception de ressort (5), la plaque de recouvrement (6) et le corps de base (4) pouvant être reliés entre eux par l'intermédiaire d'au moins un premier moyen de liaison (10), l'au moins un premier moyen de liaison (10) bloquant la plaque de recouvrement (6) contre un mouvement par rapport au corps de base (4) dans la direction d'un axe central (50) du boîtier de ressort (1), **caractérisé en ce que** l'au moins un premier moyen de liaison (10) est constitué d'une ouverture (21, 26) dans le corps de base (4) et d'un prolongement (22, 25) de la plaque de recouvrement (6) correspondant à l'ouverture (21, 26), **en ce que** le prolongement (22, 25) peut être enfiché dans l'ouverture (21, 26), **en ce que** le corps de base (4) peut être relié à la plaque de recouvrement (6) par un mouvement relatif du prolongement (22, 25) du premier moyen de liaison (10) par rapport à l'ouverture (21, 26) du premier moyen de liaison (10) dans une direction transversale (40), transversalement à l'axe central (50), de telle sorte que la plaque de recouvrement (6) est bloquée contre un mouvement par rapport au corps de base (4) dans la direction de l'axe central (50), ce qui est obtenu en poussant la plaque de recouvrement (6) avec son prolongement (22, 25) dans la direction transversale (40) dans l'ouverture (21).

2. Boîtier de ressort selon la revendication 1,
**caractérisé en ce que** l'au moins un premier moyen de liaison (10) peut être monté sans outil.

3. Boîtier de ressort selon la revendication 1 ou 2,
**caractérisé en ce que** l'ouverture (21, 26) traverse complètement le corps de base (4) dans la direction transversale (40), transversalement à l'axe central (50).

4. Boîtier de ressort selon l'une quelconque des revendications 1 à 3,
**caractérisé en ce que** le prolongement (22, 25), à l'état relié de la plaque de recouvrement (6) et du corps de base (4), fait saillie dans la direction transversale (40) transversalement à l'axe central (50) au-delà de l'espace de réception de ressort (5).

5. Boîtier de ressort selon l'une quelconque des revendications 1 à 4,
**caractérisé en ce qu'**il est prévu au moins deux premiers moyens de liaison (10) qui sont agencés dans une plage angulaire périphérique (α) inférieure à 180°, mesurée par rapport à l'axe central (50) à l'état relié de la plaque de recouvrement (6) et du corps de base (4).

6. Boîtier de ressort selon l'une quelconque des revendications 1 à 5,
**caractérisé en ce que** l'ouverture (21, 26) possède un bord périphérique fermé (23).

7. Boîtier de ressort selon l'une quelconque des revendications 1 à 6,
**caractérisé en ce que** le prolongement (22, 25) enfiché dans l'ouverture (21, 26) est précontraint contre le bord (23) de l'ouverture (21, 26).

8. Boîtier de ressort selon la revendication 7,
**caractérisé en ce que** le prolongement (22, 25) de la plaque de recouvrement (6) s'appuie dans l'ouverture (21, 26) avec un côté supérieur (11) de la plaque de recouvrement (6) sur une surface d'appui de prolongement (24) du corps de base (4), et **en ce que** la plaque de recouvrement (6) s'applique à l'extérieur de l'ouverture (21, 26) avec un côté inférieur (12) de la plaque de recouvrement (6) sur une surface d'application (8) du corps de base (4).

9. Boîtier de ressort selon la revendication 8,
**caractérisé en ce que** la surface d'application (8) est inclinée par rapport à un plan imaginaire (E) perpendiculaire à l'axe central (50).

10. Boîtier de ressort selon l'une quelconque des revendications 1 à 9,
**caractérisé en ce que** le boîtier de ressort (1) comprend, outre l'au moins un premier moyen de liaison (10), un deuxième moyen de liaison (20) qui bloque la plaque de recouvrement (6) contre un mouvement par rapport au corps de base (4) dans une direction transversale (40) transversalement à l'axe central (50).

11. Boîtier de ressort selon l'une quelconque des revendications 1 à 10,
**caractérisé en ce que** le deuxième moyen de liaison (20) comprend une vis (28) qui présente une distance par rapport à l'axe central (50).

12. Boîtier de ressort selon l'une quelconque des revendications 1 à 11,
**caractérisé en ce que** le boîtier de ressort (1) est réalisé d'un seul tenant avec une poulie (30) pour un câble de lancement pour lancer le moteur à combustion interne (3).

13. Boîtier de ressort selon la revendication 12,
**caractérisé en ce que** la poulie (30) destinée à recevoir le câble de lancement présente une cavité (71) entourant l'axe central (50) avec un fond (76), et **en ce que** le contour du fond (76) suit une forme circulaire dans une plage angulaire continue (β) d'au moins 270°.

14. Dispositif de lancement avec un boîtier de ressort (1) selon l'une quelconque des revendications 1 à 13.
